# FASCICULE DE BREVET EUROPEEN

(11) **EP 1 724 500 B1**
(45) Date de publication et mention de la délivrance du brevet: **31.03.2010**
(21) Numéro de dépôt: 06300397.4
(22) Date de dépôt: 24.04.2006
(51) Int. Cl.: F16J 15/06, F16J 15/08

(54) **Joint plat métallique comprenant une languette**
Dichtung mit befestigten Laschen
Gasket with a retaining tab

(30) Priorité: 20.05.2005 FR 0505073
(43) Date de publication de la demande: 22.11.2006
(73) Titulaire: Renault SAS, 92100 Boulogne Billancourt (FR)
(72) Inventeur: Burgat, Emmanuel, 94430 Chennevières sur Marne (FR); Dupouy, Claude, 75019 Paris (FR)
(74) Mandataire: Rougemont, Bernard

(56) Documents cités:
- EP-A- 0 500 274
- DE-A- 10 107 939
- US-A- 5 544 902

## Description

### DOMAINE TECHNIQUE AUQUEL SE RAPPORTE L'INVENTION

La présente invention concerne de manière générale les joints plats métalliques.

Elle concerne plus particulièrement un joint plat métallique qui comprend au moins une ouverture destinée à recevoir un élément de centrage cylindrique et comportant au moins une languette qui s'étend à partir du bord périphérique délimitant ladite ouverture.

L'invention trouve une application particulièrement avantageuse dans la réalisation d'un joint plat assurant l'étanchéité entre deux pièces moteur d'un véhicule automobile, par exemple un collecteur d'échappement et un turbocompresseur.

### ARRIERE-PLAN TECHNOLOGIQUE

Les joints plats métalliques sont des lames destinées à être interposées entre deux surfaces planes à assembler afin d'assurer l'étanchéité entre ces deux surfaces par comblement de leurs irrégularités.

Généralement, ces joints plats métalliques comprennent des ouvertures adaptées à recevoir des goujons de centrage pour les positionner précisément sur les surfaces à assembler. En particulier, on connaît des documents EP 0 500 274, DE 101 07 939 et US 5 544 902 des joints plats en acier comportant des ouvertures destinées à recevoir des goujons de centrage ou des vis de fixation. L'une au moins des ouvertures de ces joints présente une ou plusieurs languettes qui s'étendent radialement vers le centre de l'ouverture, à partir du bord de cette ouverture. En outre, de tels joints plats métalliques déjà connus comprennent également en dehors desdites ouvertures un ergot de détrompage qui fait saillie sur une des faces du joint plat et qui est destiné à interférer avec une desdites surfaces planes lorsque le joint plat est monté selon un mauvais sens de montage.

Toutefois, l'ergot de détrompage qui fait saillie de la face du joint peut blesser la personne qui manipule le joint. En outre, la présence de l'ergot de détrompage sur le joint plat nécessite de prévoir sur une des surfaces planes destinées à être montées contre le joint plat un logement permettant l'insertion de l'ergot.

Par ailleurs lors du montage du joint plat, si l'ergot de détrompage n'entre pas dans le logement prévu dans la surface plane à assembler mais se replie, il risque d'être la cause de fuites.

Enfin, ce type de joints plats ne présente aucune structure interdisant leurs réutilisations. Or, un joint plat monté une seconde fois présente une capacité amoindrie à retenir d'éventuelles fuites.

### OBJET DE L'INVENTION

Afin de remédier aux inconvénients précités de l'état de la technique, la présente invention propose un joint plat comportant une structure optimisée dépourvue d'ergot de détrompage.

Plus particulièrement, on propose selon l'invention un joint plat métallique selon la revendication 1.

Ainsi, chaque languette assure une fonction de détrompage dans la mesure où l'ouverture à partir de laquelle elle s'étend ne peut recevoir l'élément de centrage que selon un unique sens de montage. En effet, l'élément de centrage ne peut s'insérer dans ladite ouverture que par le côté du joint sur lequel aucune languette ne forme de saillie. Si l'insertion était réalisée par le côté opposé, la saillie de chaque languette empêcherait d'insérer l'élément de centrage dans ladite ouverture.

Selon une autre caractéristique du joint plat métallique conforme à l'invention, chaque languette présente une extrémité coudée qui se rattache au bord périphérique de ladite ouverture.

Selon une autre caractéristique du joint plat métallique conforme à l'invention, chaque languette présente un profil majoritairement droit.

Selon une autre caractéristique du joint plat métallique conforme à l'invention, chaque languette est réalisée lors d'une opération de découpage ou de poinçonnage de chaque ouverture associée, de sorte qu'elle forme une pièce monobloc avec le joint plat.

Ainsi, sa conception et sa réalisation sont simples et peu coûteuses.

Selon une autre caractéristique du joint plat métallique conforme à l'invention, il comprend plusieurs ouvertures dont une seule comporte au moins une languette.

Ainsi, l'ouverture comportant au moins une languette assure une fonction de centrage, fonction que les autres ouvertures du joint plat ne sont plus tenues d'assurer. Cette fonction de centrage est par ailleurs correctement assurée alors même que les cotes de ladite ouverture ne présentent pas nécessairement un ajustement précis.

Selon un premier mode de réalisation du joint plat métallique conforme à l'invention, il comprend trois languettes aux sommets d'un triangle équilatéral inscrit dans le bord périphérique de ladite ouverture.

Ainsi, les languettes assurent une fonction de centrage du joint plat, bloquant en effet toutes les translations de ce dernier dans le plan de l'ouverture.

Selon un second mode de réalisation du joint plat métallique conforme à l'invention, il comprend deux languettes diamétralement opposées dans une ouverture.

Ainsi, les languettes assurent une fonction de centrage du joint plat selon l'axe passant par les deux languettes.

L'invention concerne également un ensemble qui comporte deux pièces à assembler l'une avec l'autre, à savoir une première pièce comprenant au moins un élément de centrage et une deuxième pièce pourvue d'au moins un logement destiné à recevoir ledit élément de centrage ; ensemble dans lequel ledit logement est pourvu à son embouchure d'un chanfrein et dans lequel est prévu un joint plat métallique tel que décrit précédemment assurant le raccord entre les deux pièces, dont l'ouverture est destinée à être traversée par ledit élément de centrage et dont chaque languette est destinée à se loger dans ledit chanfrein.

Ainsi, lors du montage de l'ensemble, aucune languette n'est comprimée par la deuxième pièce. En conséquence, il n'y a pas de risque d'endommagement de la languette, et donc pas de fuite.

Selon une autre caractéristique avantageuse de l'ensemble conforme à l'invention, à l'état monté, chaque languette s'applique sur ledit élément de centrage de manière à obliger la destruction du joint plat lors d'un éventuel démontage.

Ainsi, les languettes interdisent la réutilisation éventuelle du joint plat qui présenterait sinon une capacité amoindrie à retenir d'éventuelles fuites. Par ailleurs, chaque languette s'applique sur ledit élément de centrage de sorte qu'elle maintient le joint en position pendant la phase d'assemblage.

Selon une variante de réalisation de l'ensemble conforme à l'invention, chaque élément de centrage comprend un filet de vis au fond duquel l'extrémité libre de chaque languette est destinée à s'appliquer.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés:
- la figure 1 est une vue éclatée en perspective d'un ensemble comprenant un turbocompresseur, un collecteur d'échappement et un joint plat selon l'invention ;
- la figure 2 est une vue schématique de face du joint plat de la figure 1 ;
- la figure 3 est une vue schématique de face d'une première variante de réalisation du joint plat de la figure 2 ; et
- la figure 4 est une vue schématique de face d'une seconde variante de réalisation du joint plat de la figure 2.

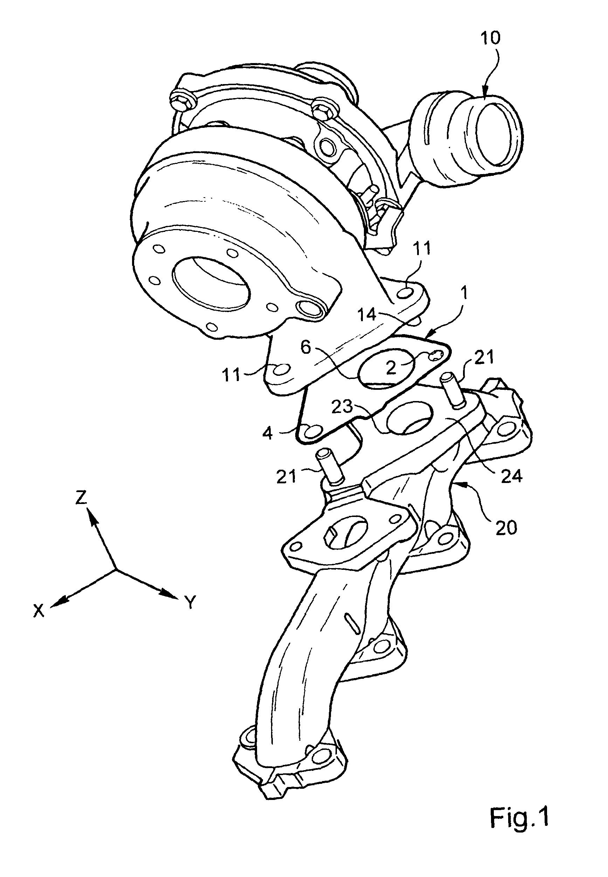

Sur la figure 1, on a représenté schématiquement un ensemble comprenant un turbocompresseur 10, un joint plat 1 métallique et un collecteur d'échappement 20.

Le collecteur d'échappement 20 est destiné à être placé en aval d'une chambre de combustion d'un moteur de véhicule automobile. II comporte donc en entrée quatre conduites collectant les gaz d'échappement de quatre cylindres de la chambre de combustion. Il comprend par ailleurs en sortie deux conduites dont l'une d'elles, la conduite 23, est destinée à conduire les gaz d'échappement vers le turbocompresseur 10. Cette conduite 23 débouche sur une surface plane 24 du collecteur d'échappement 20 s'étendant sensiblement dans le plan XY. Trois goujons de centrage 21 de forme cylindrique s'étendent à partir de cette surface plane 24 selon l'axe Z, sur la figure 1. Le triangle décrit par les centres géométriques des trois goujons de centrage 21 est un triangle isocèle.

Le turbocompresseur 10 comporte quant à lui une conduite d'entrée et une conduite de sortie. La conduite d'entrée débouche elle aussi sur une surface plane 14 placée dans le plan XY. Ladite conduite d'entrée du turbocompresseur 10 présente un diamètre sensiblement égal au diamètre de la conduite 23 du collecteur d'échappement 20. Trois trous débouchants 11 s'étendent à partir de cette surface plane 14 selon l'axe Z. Les trois trous débouchants 11 sont positionnés sur la surface plane 14 de sorte qu'ils puissent accueillir lesdits goujons de centrage 21 de manière à ce que la conduite d'entrée du turbocompresseur 10 se positionne en vis-à-vis de la conduite 23 du collecteur d'échappement 20. Préférentiellement, l'embouchure des trous débouchants 11 est pourvue d'un chanfrein.

Par ailleurs, un joint plat 1 métallique est destiné à être placé entre les deux surfaces planes 14,24 du collecteur d'échappement 20 et du turbocompresseur 10.

Ce joint plat 1 est réalisé en acier inoxydable afin de résister aux contraintes mécaniques et thermiques qu'il est appelé à subir. Sensiblement de forme triangulaire, il présente une faible épaisseur.

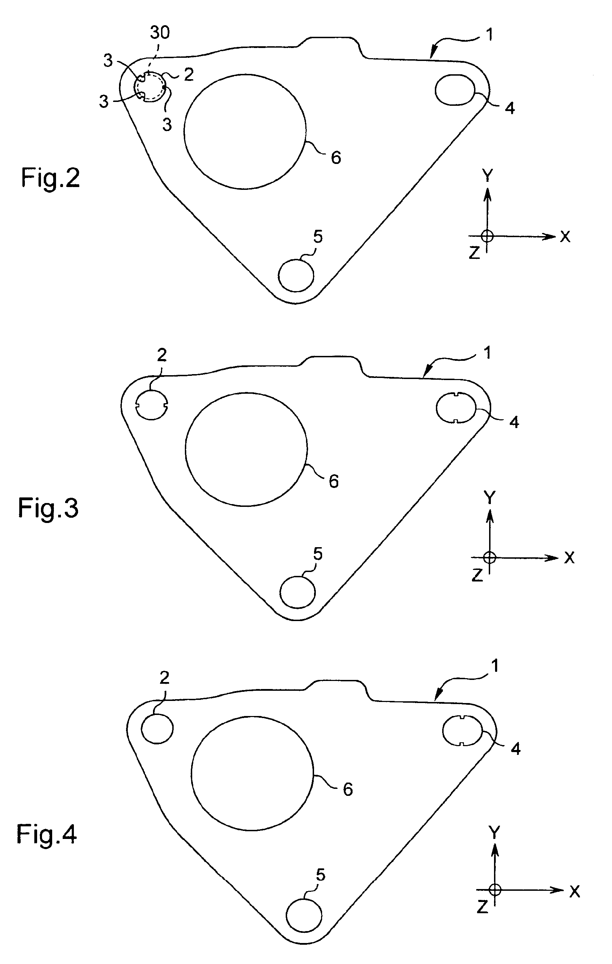

Comme le montrent plus particulièrement les figures 2,3 et 4, le joint plat 1 comprend quatre ouvertures 2,4,5,6.

L'ouverture 6 est l'ouverture principale qui est circulaire. Elle est disposée de manière décentrée sur le joint plat 1 de manière à venir lors de son montage en regard, d'une part, de la conduite d'échappement 23 du collecteur d'échappement 20 et, d'autre part, de la conduite d'entrée du turbocompresseur 10. Cette ouverture 6 présente un diamètre supérieur au diamètre de la conduite d'échappement 23.

Les trois autres ouvertures 2,4,5 sont destinées à être traversées par les trois goujons de centrage 21 pour que ceux-ci s'engagent dans les trous débouchants 11 de la surface plane 14 du turbocompresseur 10.

Comme le montre plus particulièrement la figure 2, l'ouverture 3 est une ouverture circulaire qui est destinée à bloquer le joint plat 1 en translation selon les axes X et Y. L'ouverture 5 est également une ouverture circulaire qui présente quant à elle un diamètre légèrement supérieur au diamètre des goujons de centrage 21.

L'ouverture 4 présente quant à elle une forme oblongue. La longueur de l'ouverture 4 est disposée selon l'axe X. La largeur de l'ouverture 4, disposée selon l'axe Y, a une valeur sensiblement égale à celle du diamètre des goujons de centrage 21. La combinaison des caractéristiques géométriques des ouvertures 3,4 est destinée à assurer une fonction de blocage en rotation du joint plat 1 autour de l'axe Z.

Selon une caractéristique particulièrement avantageuse du joint plat 1 métallique, il comporte au moins une languette 3 qui s'étend à partir du bord périphérique délimitant l'ouverture 2. Les ouvertures 4,5 sont quant à elles dépourvues de telles languettes 3.

Selon le mode de réalisation représenté sur la figure 2, le joint plat 1 comporte trois languettes 3. Ces trois languettes sont disposées aux sommets d'un triangle équilatéral inscrit dans le bord périphérique de ladite ouverture 2.

Préférentiellement, chaque languette 3 s'étend en dehors du plan de l'ouverture 2, formant ainsi une saillie sur une même face du joint plat 1.

Chaque languette 3 présente un profil majoritairement droit dont seule l'extrémité rattachée au bord périphérique de l'ouverture 2 est coudée.

Les languettes 3 sont réalisées ici lors d'une opération de découpage ou de poinçonnage du joint plat 1 de sorte qu'elles forment une pièce monobloc avec lui.

Le cercle géométrique 30 passant sensiblement par les trois extrémités des languettes 3 présente un diamètre légèrement inférieur au diamètre des goujons de centrage 21. Si les goujons de centrage 21 comprennent des filets de vis, ledit cercle géométrique 30 présente un diamètre légèrement inférieur au diamètre intérieur des filets de vis des goujons de centrage 21.

Lors du montage du joint plat 1 sur la surface plane 24 du collecteur d'échappement 20, les trois ouvertures 2,4,5 viennent s'engager sur les goujons de centrage 21 de sorte que l'ouverture 6 s'étende en vis-à-vis du conduit 23 du collecteur d'échappement 20.

Les languettes 3 forment des saillies sur la même face du joint plat 1 dont les extrémités libres appartiennent à un cercle géométrique 30 qui présente un diamètre inférieur à celui des goujons de centrage 21. Ainsi, si cette face est présentée aux goujons de centrage 21 lors du montage du joint plat 1 sur ces goujons de centrage 21, alors les languettes 3 empêchent l'insertion du goujon de centrage 21 destiné à s'insérer dans l'ouverture 2.

En revanche, si l'autre face du joint plat 1 est présentée aux goujons de centrage 21, les languettes 3 se déforment et viennent en contact de la surface latérale du goujon de centrage 21 qui s'insère dans l'ouverture 2. En particulier, si les goujons de centrage 21 comprennent des filets de vis, les languettes 3 s'appliquent contre le fond des filets de vis du goujon de centrage 21. La fonction de détrompage est ainsi assurée.

II est intéressant de préciser que, le cercle géométrique 30 présentant un diamètre inférieur à celui des goujons de centrage 21, les languettes 3 se déforment plastiquement lors du montage du joint plat 1 sur le collecteur d'échappement 20. Une fois l'ensemble monté, elles appuient donc sur ledit goujon de centrage 21. Cet appui permet, d'une part, de maintenir le joint plat 1 lors du montage du turbocompresseur 10 sur cet ensemble et, d'autre part, d'interdire le démontage du joint plat 1. La présence des languettes 3 nécessite en effet de casser le joint plat 1 pour le désolidariser du collecteur d'échappement 20. Ainsi, les languettes 3 empêchent la réutilisation éventuelle du joint plat 1.

Les trois languettes 3 assurent aussi une fonction de centrage dans la mesure où, étant appliquées contre le goujon de centrage 21, elles maintiennent le joint plat 1 fixe en translation selon les axes X et Y de la figure 2.

L'ouverture 4 présente par ailleurs une largeur sensiblement égale au diamètre des goujons de centrage 21. La translation du joint plat selon l'axe Y est donc aussi bloquée par cette ouverture 4.

La translation du joint plat 1 selon l'axe Y étant alors bloquée en deux points distincts, la rotation du joint plat 1 autour de l'axe Z est en conséquence elle aussi bloquée. Le joint plat 1 ne peut donc pas bouger par rapport aux goujons de centrage 21, il est donc correctement centré.

Ce centrage est d'autant plus aisément réalisable que seule la largeur de l'ouverture 4 doit être correctement ajustée lors de sa construction. L'éventuel jeu dû à un ajustement peu précis du diamètre de l'ouverture 2 est en effet rattrapé par la déformation des languettes 3 sur le goujon de centrage 21.

Lors du montage du turbocompresseur 10 sur l'ensemble formé par le joint plat 1 et par le collecteur d'échappement 20, les goujons de centrage 21 s'insèrent dans les trous débouchants 11. Les languettes 3 se logent quant à elles dans le chanfrein du trou débouchant 11 qui s'engage sur le goujon de centrage 21 contre lequel les languettes 3 s'appuient. Elles ne sont ainsi pas compressées par le turbocompresseur 10, ce qui pourrait sinon engendrer des fuites.

Sur la figure 3, on a représenté une première variante de réalisation du joint plat 1 métallique selon laquelle l'ouverture 2 et l'ouverture 4 comportent chacune deux languettes 3.

Selon ce mode de réalisation, le joint plat 1 comporte ici également quatre ouvertures. L'ouverture 6 et l'ouverture 5 conservent leur forme et leur position précédemment décrites. L'ouverture 2, de forme circulaire, conserve un diamètre légèrement supérieur au diamètre des goujons de centrage 21. En revanche, seules deux languettes 3 s'étendent à partir du bord périphérique de ladite ouverture 2. Ces deux languettes 3 sont disposées de manière diamétralement opposées sur le cercle décrit par le contour de l'ouverture 2, selon l'axe X.

L'ouverture 4 présente ici également une forme oblongue disposée selon l'axe X. En revanche, la valeur de sa largeur selon l'axe Y est ici légèrement supérieure à la valeur du diamètre des goujons de centrage 21. Deux languettes 3 s'étendent à partir du bord périphérique délimitant cette ouverture 4. Elles sont disposées au centre de chacun des côtés droits de la forme oblongue du bord délimitant l'ouverture 4, selon l'axe Y.

Les languettes 3 conservent ici encore leur fonction de détrompage, de maintient du joint plat 1 pendant la phase de montage et de destruction du joint plat 1 au démontage.

En outre, les deux languettes 3 s'étendant à partir du contour de l'ouverture 2 assurent également une fonction de blocage en translation du joint plat 1 selon l'axe X. Celles s'étendant à partir du contour de l'ouverture 4 assurent quant à elles une fonction de blocage en translation du joint plat 1 selon l'axe Y.

L'avantage principal d'une telle variante de réalisation réside dans le fait qu'aucune des ouvertures 2,4,5 destinées à recevoir un goujon de centrage 21 doit nécessairement présenter des cotes ajustées. Ce sont en effet les languettes 3 qui assurent seules la fonction de centrage du joint plat 1 par blocage en translation de ce joint plat 1 selon les axes X et Y.

Sur la figure 4, on a représenté une seconde variante de réalisation du joint plat 1 métallique selon laquelle l'ouverture 4 comporte deux languettes 3.

Selon ce mode de réalisation, le joint plat 1 comporte ici également 4 ouvertures. L'ouverture 6 et l'ouverture 5 conservent leur forme et leur position précédemment décrites. L'ouverture 2, de forme circulaire, est ici dépourvue de languette 3 mais présente un diamètre très ajusté par rapport au diamètre des goujons de centrage 21.

L'ouverture 4 présente ici également une forme oblongue disposée selon l'axe X. En revanche, la valeur de sa largeur selon l'axe Y est ici légèrement supérieure à la valeur du diamètre des goujons de centrage 21. Deux languettes 3 s'étendent à partir du bord périphérique délimitant cette ouverture 4. Elles sont disposées au centre de chacun des côtés droits de la forme oblongue du bord délimitant l'ouverture 4, selon l'axe Y.

Les languettes 3 conservent ici encore leur fonction de détrompage, de maintient du joint plat 1 pendant la phase de montage et de destruction du joint plat 1 au démontage.

L'ouverture 2 étant très ajustée, elle réalise une fonction de centrage du joint plat 1 en translation selon l'axe X et l'axe Y. Les deux languettes 3 s'étendant à partir du contour de l'ouverture 4 empêchent quant à elles au joint plat 1 toute rotation autour de l'axe Z.

L'avantage principal d'une telle variante de réalisation réside dans le fait qu'aucune des distances entre les différentes ouvertures 2,4,5 ne nécessite un ajustement précis. L'ouverture 5 est en effet suffisamment grande pour ne pas nécessiter d'ajustage. L'ouverture 4 possède quant à elle une forme oblongue qui permet aussi de négliger de tels ajustements.

La présente invention n'est nullement limitée aux modes de réalisation décrits et représentés, mais l'homme du métier saura y apporter toute variante conforme à l'objet des revendications.

## Revendications

1. Joint plat (1) métallique qui comprend au moins une ouverture (2) destinée à recevoir un élément de centrage (21;22) cylindrique et comportant au moins une languette (3) qui s'étend à partir du bord périphérique délimitant ladite ouverture (2), **caractérisé en ce que,** avant le montage du joint plat (1), chaque languette (3) s'étend en dehors du plan de ladite ouverture (2) pour former une saillie sur une face du joint plat (1) assurant une fonction de détrompage.

2. Joint plat (1) selon la revendication 1, **caractérisé en ce que** chaque languette (3) présente une extrémité coudée qui se rattache au bord périphérique de ladite ouverture (2).

3. Joint plat (1) selon l'une des revendications 1 et 2, **caractérisé en ce que** chaque languette (3) présente un profil majoritairement droit.

4. Joint plat (1) selon l'une des revendications 1 à 3, **caractérisé en ce que** chaque languette (3) est réalisée lors d'une opération de découpage ou de poinçonnage de chaque ouverture (2) associée de sorte qu'elle forme une pièce monobloc avec le joint plat (1).

5. Joint plat (1) selon l'une des revendications 1 à 4, **caractérisé en ce qu'**il comprend plusieurs ouvertures (2) dont une seule comporte au moins une languette (3).

6. Joint plat (1) selon l'une des revendications 1 à 5, **caractérisé en ce qu'**il comprend deux languettes (3) diamétralement opposées dans une ouverture (2).

7. Joint plat (1) selon l'une des revendications 1 à 5, **caractérisé en ce qu'**il comprend trois languettes (3) aux sommets d'un triangle équilatéral inscrit dans le bord périphérique de ladite ouverture (2).

8. Ensemble qui comporte deux pièces (10,20) à assembler l'une avec l'autre, à savoir une première pièce (20) comprenant au moins un élément de centrage (21;22) et une deuxième pièce (10) pourvue d'au moins un logement (11;12) destiné à recevoir ledit élément de centrage, **caractérisé en ce que** ledit logement (11;12) est pourvu à son embouchure d'un chanfrein et **en ce qu'**il comporte un joint plat (1) métallique selon l'une des revendications 1 à 7 assurant le raccord entre les deux pièces, dont l'ouverture est destinée à être traversée par ledit élément de centrage (21 ;22) et dont chaque languette (3) est destinée à se loger dans ledit chanfrein.

9. Ensemble, selon la revendication 8, **caractérisé en ce qu'**à l'état monté, chaque languette (3) s'applique sur ledit élément de centrage (21 ;22) de manière à obliger la destruction dudit joint plat (1) lors d'un éventuel démontage.

10. Ensemble, selon l'une des revendications 8 ou 9, **caractérisé en ce que** chaque élément de centrage (22) comprend un filet de vis au fond duquel l'extrémité libre de chaque languette (3) est destinée à s'appliquer.

## Claims

1. Flat metal seal (1) which comprises at least one aperture (2) designed to receive a cylindrical centring element (21; 22) and comprising at least one tongue (3) which extends from the peripheral edge delimiting the said aperture (2), **characterized in that,** before the flat seal (1) is installed, each tongue (3) extends outside the plane of the said aperture (2) in order to form a protrusion on one face of the flat seal (1) performing an error-preventing function.

2. Flat seal (1) according to Claim 1, **characterized in that** each tongue (3) has a bent end which is attached to the peripheral edge of the said aperture (2).

3. Flat seal (1) according to one of Claims 1 and 2, **characterized in that** each tongue (3) has a mainly straight profile.

4. Flat seal (1) according to one of Claims 1 to 3, **characterized in that** each tongue (3) is produced during an operation for cutting or punching each associated aperture (2) so that it forms a single piece with the flat seal (1).

5. Flat seal (1) according to one of Claims 1 to 4, **characterized in that** it comprises several apertures (2) only one of which comprises at least one tongue (3).

6. Flat seal (1) according to one of Claims 1 to 5, **characterized in that** it comprises two tongues (3) that are diametrically opposed in an aperture (2).

7. Flat seal (1) according to one of Claims 1 to 5, **characterized in that** it comprises three tongues (3) at the apexes of an equilateral triangle included in the peripheral edge of the said aperture (2).

8. Assembly that comprises two parts (10, 20) to be assembled together, namely a first part (20) comprising at least one centring element (21; 22) and a second part (10) provided with at least one housing (11; 12) designed to receive the said centring element, **characterized in that** the said housing (11; 12) is provided at its mouth with a bevel and **in that** it comprises a flat metal seal (1) according to one of Claims 1 to 7 providing the connection between the two parts, the aperture of which is designed to be traversed by the said centring element (21; 22) and each tongue (3) of which is designed to fit into the said bevel.

9. Assembly according to Claim 8, **characterized in that,** in the installed state, each tongue (3) is pressed on the said centring element (21; 22) so as to force the destruction of the said flat seal (1) at the time of a possible removal.

10. Assembly according to one of Claims 8 or 9, **characterized in that** each centring element (22) comprises a screw thread on the bottom of which the free end of each tongue (3) is designed to be pressed.

## Patentansprüche

1. Metallische Dichtungsscheibe (1), die wenigstens eine Öffnung (2) aufweist, die dazu bestimmt ist, ein zylindrisches Zentrierelement (21; 22) aufzunehmen, und wenigstens eine Zunge (3) enthält, die sich von dem die Öffnung (2) begrenzenden Umfangsrand erstreckt, **dadurch gekennzeichnet, dass** jede Zunge (3) vor der Montage der Dichtungsscheibe (1) aus der Ebene der Öffnung (2) vorsteht, um einen Vorsprung auf einer Seite der Dichtungsscheibe (1) zu bilden, der eine Unverwechselbarkeitsfunktion sicherstellt.

2. Dichtungsscheibe (1) nach Anspruch 1, **dadurch gekennzeichnet, dass** jede Zunge (3) ein gebogenes Ende aufweist, das an den Umfangsrand der Öffnung (2) angefügt ist.

3. Dichtungsscheibe (1) nach einem der Ansprüche 1 und 2, **dadurch gekennzeichnet, dass** jede Zunge (3) ein hauptsächlich gerades Profil aufweist.

4. Dichtungsscheibe (1) nach einem der Ansprüche 1 bis 3, **dadurch gekennzeichnet, dass** jede Zunge (3) bei einem Stanz- oder Lochungsvorgang jeder zugeordneten Öffnung (2) verwirklicht wird, derart, dass sie mit der Dichtungsscheibe (1) einteilig ausgebildet ist.

5. Dichtungsscheibe (1) nach einem der Ansprüche 1 bis 4, **dadurch gekennzeichnet, dass** sie mehrere Öffnungen (2) aufweist, wovon eine einzige wenigstens eine Zunge (3) enthält.

6. Dichtungsscheibe (1) nach einem der Ansprüche 1 bis 5, **dadurch gekennzeichnet, dass** sie zwei Zungen (3) aufweist, die in einer Öffnung (2) diametral entgegengesetzt sind.

7. Dichtungsscheibe (1) nach einem der Ansprüche 1 bis 5, **dadurch gekennzeichnet, dass** sie drei Zungen (3) an den Ecken eines gleichseitigen Dreiecks, das in den Umfangsrand der Öffnung (2) einbeschrieben ist, aufweist.

8. Anordnung, die zwei aneinander anzubringende Teile (10, 20), nämlich ein erstes Teil (20), das wenigstens ein Zentrierelement (21; 22) aufweist, und ein zweites Teil (10), das mit wenigstens einem Aufnahmesitz (11; 12) versehen ist, der dazu vorgesehen ist, das Zentrierelement aufzunehmen, enthält, **dadurch gekennzeichnet, dass** der Aufnahmesitz (11; 12) an seiner Mündung mit einer Fase versehen ist und dass sie eine metallische Dichtungsscheibe (1) nach einem der Ansprüche 1 bis 7, enthält, die die Verbindung zwischen den zwei Teilen sicherstellt und deren Öffnung dazu vorgesehen ist, von dem Zentrierelement (21; 22) durchquert zu werden, und wovon jede Zunge (3) dazu vorgesehen ist, in der Fase aufgenommen zu werden.

9. Anordnung nach Anspruch 8, **dadurch gekennzeichnet, dass** im montierten Zustand jede Zunge (3) auf das Zentrierelement (21; 22) drückt, derart, dass die Zerstörung der Dichtungsscheibe (1) bei einer eventuellen Demontage erzwungen wird.

10. Anordnung nach einem der Ansprüche 8 oder 9, **dadurch gekennzeichnet, dass** jedes Zentrierelement (22) ein Schraubengewinde aufweist, auf dessen Boden das freie Ende jeder Zunge (3) drücken soll.
